# Europäisches Patentamt

## European Patent Office

## Office européen des brevets

(19)

(11) Veröffentlichungsnummer: **0 053 778**
**B1**

(12) ## EUROPÄISCHE PATENTSCHRIFT

(45) Veröffentlichungstag der Patentschrift:
**13.08.86**

(51) Int. Cl.⁴: **C 08 L 27/12**

(21) Anmeldenummer: **81109993.6**

(22) Anmeldetag: **28.11.81**

(54) **Dauerwärmebeständiger, Fluorkohlenwasserstoffpolymere enthaltender Formkörper.**

(30) Priorität: **05.12.80 DE 3045844**

(43) Veröffentlichungstag der Anmeldung:
**16.06.82 Patentblatt 82/24**

(45) Bekanntmachung des Hinweises auf die Patenterteilung:
**13.08.86 Patentblatt 86/33**

(84) Benannte Vertragsstaaten:
**AT CH DE FR GB IT LI NL SE**

(56) Entgegenhaltungen:
**FR-A-1 328 936**
**FR-A-2 243 970**

(73) Patentinhaber: **HOECHST AKTIENGESELLSCHAFT,**
**Postfach 80 03 20, D-6230 Frankfurt am Main 80**
**(DE)**

(72) Erfinder: **Hoheisel, Klaus, Dr., Lohmühlweg 13,**
**D-6200 Wiesbaden (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft einen Fluorkohlenwasserstoffpolymere enthaltenden Formkörper, vorzugsweise in Form einer Folie, der sowohl eine hohe Dauerwärmebeständigkeit als auch gegenüber Formkörpern nach dem Stand der Technik verbesserte mechanische Eigenschaften aufweist.

Die bekannten Folien aus Fluorkohlenwasserstoffpolymeren besitzen oft Dauerwärmebeständigkeiten, die in der Isolierstoffanwendung den VDE-Wärmeklassen B, F oder höher zuzuordnen sind. Für den Einsatz als Isolierstoff bestehen jedoch meist, z.B. in der Motorisolation, zusätzliche Forderungen nach speziellen mechanischen Eigenschaften wie Durchlagerungsfestigkeit, Falzbarkeit und Steifigkeit, die bei diesen Folien entweder fehlen oder nur in einem unbefriedigenden Maße vorhanden sind.

Es ist ganz allgemein bekannt, daß Kunststofformkörper in manchen mechanischen Eigenschaften verbessert werden können, insbesondere hinsichtlich Festigkeit und Harte, wenn man in sie fäden-, faser- oder auch plättchenförmige Materalien einlagert. In praktisch nichtdreidimensionalen Gebilden, wie insbesondere Folien, werden aber mit dieser Maßnahme nur geringe, ungenügende Effekte erzielt. Außerdem sind diese Zusätze meist anorganischer Natur. Sie bestehen z.B. aus Glas, Kohlenstoff, Metall, Bor, Metalloxiden, Nitriden, Silicaten wie Asbest oder Glimmer. Ein solcher Zusatz ist nachteilig, da die Pigmente bei den während der Verarbeitung auftretenden hohen Temperaturen gegenüber fluorhaltigen Polymeren chemisch reaktionsfähig sind, so daß es zum Abbau der Polymeren kommt. Die Reaktionen können außerdem von heftigen Wärme- und Gasfreisetzungsreaktionen begleitet sein und stellen deshalb in der technischen Praxis ein erhebliches Gefahrenmoment dar. Im übrigen sind bei solchen Zusätzen regelmäßig Zähigkeitsverluste, z.B. eine reduzierte Weiterreißfestigkeit der aus den Fluorkohlenwasserstoffpolymeren gebildeten Formkörpern, insbesondere Folien, zu verzeichnen.

Ein bekanntes Mittel der Verbesserung mechanischer Eigenschaften, insbesondere bei Folien, ist die Kombination mit anderen mechanisch besseren Schichten, sei es mit anderen Folien, Geweben, Gewirken, Vliesen, Überzügen oder anderen Schichten in Coextrudaten. Nachteilig sind hierbei allerdings der beträchtlich höhere technische Fertigungsaufwand sowie die höheren Kosten. Auch stehen hierfür nur relativ wenige, meist recht teure, Materialien wie z.B. die aromatischen Polyimide, zur Verfügung, wenn die Schichtmaterialien auch eine gute Dauerwärmebeständigkeit aufweisen sollen. Im übrigen ist es wegen der Äußerst abweisenden Eigenschaften der Fluorkohlenwasserstoffpolymeren schwierig, feste und dauerhafte Verbundhaftungen zu den obengenannten Schichten zu erreichen, was sich in der Praxis in einer störenden Delaminierungsempfindlichkeit der Verbunde äußert.

Es stellte sich somit die Aufgabe, Fluorkohlenwasserstoffpolymere enthaltende Formkörper, insbesondere Folien, zu schaffen, die sowohl hohe Dauerwärmebeständigkeit als auch gute mechanische Eigenschaften im Hinblick auf die Verwendung als isolierende Materialien aufweisen.

Aus der FR-A-2 243 970 sind Harzzusammensetzungen bekannt, die weich gemacht sind und deren Weichmachung resistent gegen thermische Alterung ist. Die bekannten Harzzusammensetzungen werden eingesetzt zur Bildung von Fäden, die weich sind, aber keine Tendenz zur Kräuselung zeigen. Die bekannten Harzzusammensetzungen bestehen aus Polyvinylidenfluorid mit einem Zusatz von Weichmachern vom Oligoestertyp mit bestimmten Endgruppen, die eine sehr gute Verträglichkeit mit Polyvinyleniluorid zeigen und die nicht wie die üblichen niedermolekularen Weichmacher vom Diestertyp nach einiger Zeit aus dem Harz herausdiffundieren. Diese Weichmacher können aber keinen Beitrag zur Verbesserung der Dauerwärmebeständigkeit fluorhaltiger Polymerer leisten, insbesondere können sie nicht verhindern, daß es bei Anwendung höherer Temperaturen über längere Zeit hinweg zum Abbau der Moleküle und zu unerwünschten Wärme- und Gasfreisetzungsreaktionen kommt.

Gelöst wird die vorstehend genannte Aufgabe durch einen dauerwärmebeständigen, Fluorkohlenwasserstoffpolymere enthaltenden Formkörper, dessen kennzeichnendes Merkmal darin besteht, daß er aus wenigstens einem über die Schmelze verarbeitbaren Fluorkohlenwssserstoffpolymeren und wenigstens einem wärmestabilen thermoplastischen Kunststoff aufgebaut ist, wobei wenigstens das Fluorkohlenwasserstoffpolymere eine zusammenhängende oder zumindest weitgehend zusammenhängende Phase bildet.

Als geeignete, über die Schmelze verarbeitbare Fluorkohlenwasserstoffpolymere kommen die bekannten fluorsubstituierten Vinylpolymere in Frage, beispielsweise die Homopolymeren Polyvinylidenfluorid, Polyvinylfluorid oder entsprechende Copolymere, die sich beispielsweise von Vinylidenfluorid, Vinylfluorid, Tetrafluoräthylen, Perfluoralkylvinyläthern usw. ableiten oder Copolymere eines oder mehrere dieser fluorhaltigen Monomeren und/ oder dieser Copolymeren mit fluorfreien copolymerisierbaren Monomeren, wie z.B. Äthylen.

Die bevorzugten Fluorkohlenwasserstoffpolymeren sind Polyvinylidenfluorid und die Copolymeren aus Tetrafluoräthylen mit Hexafluorpropylen bzw. Äthylen, auch in geringfügig chemisch modifizierten Einstellungen, wobei die Tetrafluoräthylen-Äthylen-Copolymertypen als besonders geeignet bevorzugt werden. Anteile an nicht ausgeprägt thermoplastischen Fluorkohlenwasserstoffpolymeren wie Polytetrafluoräthylen in Mengen und Vereilung, die die thermoplastische Verarbeitung und hasenausbildung nicht beeinträchtigen, sind möglich.

Geeignete thermoplastische wärmestabile Polymere sind im Prinzip in verschiedenen Polymerklassen zu finden, z.B. bei den Polyestern, Polycarbonaten, Polyamiden, Polyimiden, Polysulfonen, Polyäthersulfonen, Polyketonen, Polyätherketonen oder Polyäthern, wobei völlige Inertheit, d.h., die Gebrauchseigenschaften nicht mindernde Folymereigenschaften, wie z.B. höhere Wasseraufnahmewerte, vorausgesetzt sind. Bevorzugte thermoplastische Polymere sind die linearen, gesättigten Polyester aromatischer Dicarbonsäuren, beispielsweise Polybutylenterephthalat und insbesondere Polyäthylenterephthalat sowie die Polycarbonate aromatischer Dihydroxyverbindungen, insbesondere des Bisphenols A.

Die Gewichtsverhältnisse, in denen die Fluorkohlenwasserstoffpolymere und die thermoplastischen Polymere zueinander stehen, liegen zwischen 80:20 bis 20:80, wobei Verhältnisse von etwa 70:30 bis 50:50 bevorzugt werden.

Die Herstellung der Mischungen zur weiteren Verarbeitung zu dem Formkörper erfolgt nach den üblichen Methoden über die Schmelze in einem gesonderten Prozeßschritt oder direkt über den Extruder, mit dem die Formkörperherstellung, insbesondere die Folienproduktion, vorgenommen wird.

Erfindungswesentlich ist, daß die Herstellung des Formkörpers derart durchgeführt wird, daß zumindest das Fluorkohlenwasserstoffpolymere eine zusammenhängende oder im wesentlichen zusammenhängende Phase bildet, was beispielsweise über die Viskositätswahl der Komponenten erreicht werden kann.

Die bevorzugte Art des Formkörpers ist die Folienform, wobei die Folien sowohl als Flach- als auch als Schlauchfolien hergestellt werden können. Auch eine Mono- oder Biaxialstreckung der Folien ist durchführbar, gegebenenfalls in Kombination mit einer Thermofixierung; normalerweise werden aber auch ohne irgendwelche Streckprozesse brauchbare Folieneigenschaften erzielt.

Für ein Verkleben, Laminieren, Bedrucken, Beschichten, Metallisieren usw. des Formkörpers, insbesondere der Folie, können die üblichen Vorbehandlungen, wie Coronabehandlung, Beflammen, Oxidations-, Ätz-, Löse- oder Quellmittelbehandlung durchgeführt werden. Im allgemeinen ist jedoch festzustellen, daß die erfindungsgemäßen Produkte gegenüber Klebern, Druckfarben und anderen Stoffen schon im unbehandelten Zustand deutlich bessere Hafteigenschaften besitzen als die aus den zugrundeliegenden reinen Fluorkohlenwasserstoffpolymeren hergestellten Formkörper.

Additive, wie z.B. Schlupf-, Gleit-, Antiblockmittel, Stabilisatoren, Licht- oder UV-Schutzmittel, Vernetzungsmittel, Weichmacher, Füllstoffe, pulverförmig, in Form von Fasern, Plättchen, Mikrokugeln oder unregelmäßigen Körnern, Mattierungsmittel, Farbmittel, Flammschutzmittel, Antistatika, die elektrische Leitfähigkeit verbessernde Mittel, Verstärkungsmittel usw. können im Bedarfsfalle den Mischungen beigemengt werden.

Mit den erfindungsgemäßen Formkörpern läßt sich die gestellte Aufgabe überraschenderweise sehr vorteilhaft lösen. Auch auf anderen Anwendungssektoren sind die Flächengebilde mit Vorteilen einsetzbar; z.B. in der Herstellung von Kabeln, Flachkabeln, als Basismaterial i gedruckten Schaltungen usw. Bei Eluieren des thermoplastischen Polymeren sind poröse Produkte erhältlich, die beispielsweise für Trennungen geeignet sind, wo es auf gute Wärmebeständigkeit und/oder chemische Inertheit ankommt. Es ist jedoch auch möglich, durch Schmelzspinne der Komponentenmischung Fäden oder Fasern herzustellen, die dann zu Gewirken, Geweben oder Vliesen verarbeitet werden und dem angestrebten Verwendungszweck in der dauerwärmebeständigen Isolation zugeführt werden.

**Beispiel 1**

Mit Hilfe eines herkömmlichen Mischers wird ein Copolymeres aus Tetrafluoräthylen und Äthylen, das unter der Bezeichnung Hostaflon® ET von der HOECHST AKTIEN-GESELLSCHAFT erhältlich ist (mit einem molaren Monomerenverhältnis von etwa 1:1 und einer geringen chemischen Modifizierung, MFI 11/300 35 g/10 min) und Polyäthylenterephthalat (IV-Wert 0,67, gemessen in einer Phenol-Tetrachloräthan-(3:2)-mischung bei 25°C) in Form von Granulaten im Gewichtsverhältnis von 8:2 miteinander vermischt. Nach Trocknung unter üblichen Bedingungen erfolgte mit Hilfe eines 45er Technikumsextruders, Breitschlitzdüse und einer Kühlwalze bei Temperaturen der Heizzonen des Extruders zwischen 290 und 310°C und einem Ausstoß von etwa 15 kg/Stunde die Extrusion zu einer 250/um dicken Flachfolie.

Die Folie hatte eine zweiphasige Struktur mit einer zusammenhängenden Fluorkohlenwasserstoffpolymerphase. Im Gegensatz zu einer entsprechend hergestellten Folie ohne Polyesterzusatz war die Folie falzbar, gut gängig und ausformbar auf einem Deckschieberformautomaten (Typ Statomat) und wies eine 75°C bis 130°C über der Vergleichsfolie liegende (durch eine Formbeständigkeitsprüfung unter Druck und thermischer Belastung nach VDE 0345 § 26 ermittelt) Durchlagerungsfestigkeit auf. Bezüglich Dauerwärmebeständigkeit, bestimmt nach VDE 0304 Teil 2 unter Benutzung der Kriterien Reißkraft und Reißdehnung, waren trotz des relativ großen Anteiles und der geringeren Wärmebeständigkeit des Zusatzes praktisch keine Minderungen gegenüber einer Folie aus dem reinen Fluorkohlenwasserstoffpolymeren festzustellen. Die Weiterreißfestigkeit der Folie war ausgezeichnet, der E-Modul war von etwa 100 auf 1200 N/mm2 angehoben. Auch in den Elektroeigenschaften waren keine Mängel gegenüber der Vergleichsfolie festzustellen. Verklebbarkeit mit handelsüblichen Klebern, die nicht der Reihe der Spezialprodukte für Fluorkohlenwasserstoffpolymere angehören, war gegeben.

### Beispiel 2

Das Beispiel 1 wurde wiederholt mit der Ausnahme, daß das Gewichtsverhältnis der Mischung 6:4 betrug und ein Polyäthylenterephthalat mit höherem Molekulargewicht (IV-Wert 0,91) verwendet wurde. Die Folie besaß eine zusammenhängende Fluorkohlenwasserstoffpolymerphase und hatte die hohe Dauerwärmebeständigkeit der Fluorpolymerfolie bei gleichzeitig mindestens ebenso guten mechanischen Eigenschaften, wie sie bei der Folie des Beispiels 1 gefunden wurden.

### Beispiel 3

Ähnlich gute Eigenschaften wie in Beispiel 2 hatte die Folie, die gemäß Beispiel 1 hergestellt wurde mit den Änderungen, daß das Gewichtsverhältnis der Mischung bei 1:1 lag, das Fluorkohlenwasserstoffpolymere eine Schmelzviskosität (MFI 11/300) von 400 g/10 min und das Poly-Äthylenterephthalat eine Grenzviskosität (IV-Wert von 0,86) hatte; die Folie zeigte die zusammenhängende Fluorkohlenwasserstoffphase.

### Beispiel 4

Eine Wiederholung des Beispiels 3 mit der Ausnahme, daß das Fluorkohlenwasserstoffpolymere einen MFI von 100 g/10 min aufwies, lieferte eine Folie mit einem zusammenhängenden Phasenaufbau des Fluorkohlenwasserstoffpolymeren und entsprechend brauchbaren anwendungstechnischen Eigenschaften wie in Beispiel 3.

### Beispiel 5

Das Beispiel 1 wurde wiederholt mit der Ausnahme, daß anstelle von Polyäthylenterephthalat ein Polycarbonat des 4, 4'-Dihydroxydiphenyl-2, 2-propans (Bisphenol A) mit einem mittleren Molekulargewicht von größenordnungsmäßig 50 000 (Makrolon® der Bayer AG) verwendet wurde. Die Fluorkohlenwasserstoffpolymerphase der Folie war durchgehend. Die interessierenden Gebrauchseigenschaften der Folie waren ausgezeichnet.

### Beispiel 6

Das Beispiel 5 wurde wiederholt mit der Ausnahme, daß das Mischungsverhältnis 4:6 betrug. Der Phasenaufbau der Folie blieb unverändert, ihr Eigenschaftsprofil war hervorragend.

### Beispiel 7

Das Beispiel 5 wurde wiederholt, wobei das Mischungsverhältnis auf 2:8 abgeändert war. Phasenstruktur und Eigenschaftsbild der Folie waren ähnlich gut wie bei Beispiel 6.

### Patentansprüche

1. Dauerwärmebeständiger, Fluorkohlenwasserstoffpolymere enthaltender Formkörper, dadurch gekennzeichnet, daß er aus wenigstens einem über die Schmelze verarbeitbaren Fluorkohlenwasserstoffpolymeren und wenigstens einem wärmestabilen thermoplastischen Polymeren aufgebaut ist, wobei wenigstens das Fluorkohlenwasserstoffpolymere eine zusammenhängende oder zumindest weitgehend zusammenhängende Phase bildet und das Gewichtsverhältnis Fluorkohlenwasserstoffpolymeres zum termoplastischen Polymeren 80:20 bis 20:80, vorzugsweise 70:30 bis 50:50, beträgt.

2. Formkörper nach dem Anspruch 1, dadurch gekennzeichnet, daß der Formkörper eine Folie ist.

3. Formkörper nach einem der Ansprüche 1 oder 2, dadurch gekennzeichnet, daß die Fluorkohlenwasserstoffpolymerphase aus Polyvinylidenfluorid oder Copolymeren aus Tetrafluoräthylen mit Hexafluorpropylen oder Äthylen besteht.

4. Formkörper nach einem der Ansprüche 1 bis 3, dadurch gekennzeichnet, daß das wärmestabile thermoplastische Polymere aus einem linearen, gesättigten Polyester besteht.

5. Formkörper nach einem der Ansprüche 1 bis 4, dadurch gekennzeichnet, daß das wärmestabile thermoplastische Polymere aus Polyetnylenterephthalat oder aus Polycarbonaten aromatiscner Dihydroxyverbindungen, insbesondere des Bisphenols A, besteht.

6. Formkörper nach einem der Ansprüche 1 bis 5, dadurch gekennzeichnet, daß er Additive wie z.B. Schlupf-, Gleit-, Antiblock-, Licht-, UV-Schutz-, Vernetzungs-, Flammschutz-, Mattierungs- und Färbemittel, Weichmacher, Füllstoffe, leitfähigkeitsverbessernde Mittel und Antistatika enthält.

7. Verwendung des Formkörpers nach einem der Ansprüche 1 bis 6 als elektrisch isolierendes Material.

## Claims

1. A shaped body exhibiting good long-term thermal stability and containing fluorohydrocarbon polymers, characterized in that it is built up of at least one fluorohydrocarbon polymer which can be processed by melting and of at least one heat-resistant thermoplastic polymer, whereby at least the fluorohydrocarbon polymer forms a coherent or at least largely coherent phase, and that the weight ratio of the fluorohydrocarbon polymer to the thermoplastic polymer varies between 80: 20 and 20: 80, preferably between 70: 30 and 50: 50.

2. A shaped body as claimed in claim 1, which is present in the form of a film.

3. A shaped body as claimed in any of claims 1 to 2, wherein the fluorohydrocarbon polymer phase is composed of polyvinylidene fluoride or of copolymers of tetrafluoroethylene and hexafluoropropylene or ethylene.

4. A shaped body as claimed in any of claims 1 to 3, wherein the heat-resistant thermoplastic polymer is composed of a linear saturated polyester.

5. A shaped body as claimed in any of claims 1 to 4, wherein the heat-resistant thermoplastic polymer is composed of polyethylene terephthalate or of polycarbonates of aromatic dihydroxy compounds, in particular of the bisphenol A.

6. A shaped body as claimed in any of claims 1 to 5, wherein additives are contained, such as, e.g., lubricants slipping agents, anti-blocking agents, light absorbers, UV absorbers, crosslinking agents, delusterating agents, flame retardants, dyestuffs, plasticizers, fillers, conductance-improving agents and antistatic agents.

7. Use of the shaped body as claimed in any of claims 1 to 6 as an electrically insulating material.

## Revendications

1. Corps façonné contenant des polymères d'hydrocarbures fluorés stable à la chaleur à long terme, caractérisé en ce qu'il est constitué d'au moins un polymère d'hydrocarbure fluoré pouvant être traité par passage par l'état fondu et d'au moins un polymère thermoplastique stable à la chaleur, le polymère d'hydrocarbure fluoré au moins fornant une phase cohérente ou du moins une phase dans une large mesure cohérente, et le rapport pondéràl du polymère d'hydrocarbure fluoré au polymére thermoplastique allant de 80/20 à 20/80, de préférence de 70/30 à 50/5o.

2. Corps façonné selon la revendication 1, caractérisé en ce que le corps façonné est une feuille.

3. Corps façonné selon les revendications 1 et 2, caractérisé en ce que la phase de polymère d'hydrocarbure fluoré est constituée de fluorure de polyvinylidène ou de copolymères de tétrafluoroéthylène avec l'hexafluoropropylène ou l'éthylène.

4. Corps façonné selon l'une des revendications 1 à 3, caractérisé en ce que le polymère thermoplastique stable à la chaleur est constitué d'un polyester linéaire saturé.

5. Corps façonné selon l'une des revendications 1 à 4, caractérisé en ce que le polymère thermoplastique stable à la chaleur est constitué de polyéthylènetéréphtalate ou de polycarbonates de composés dihydroxylés aromatiques, en particulier de Bisphénol A.

6. Corps façonné selon l'une des revendications 1 à 5, caractérisé en ce qu'il contient des additifs comme par exemple des agents de glissement, des agents anti-blocage, des agents de protection contre la lumière et les UV, des agents réticulants, des agents ignifugeants des agents de matité et des agents colorants, des plastifiants, des charges, des agents améliorant la conductivité et des antistatiques.

7. Utilisation du corps façonné selon l'une quelconque des revendications 1 à 6, comme matériau isolant électrique.